# EUROPÄISCHE PATENTANMELDUNG

(11) **EP 0 647 812 A1**
(43) Veröffentlichungstag der Anmeldung: **12.04.1995**
(21) Anmeldenummer: 94113575.8
(22) Anmeldetag: 31.08.1994
(51) Int. Cl.: F16L 55/162, F16L 55/18

(54) **Einrichtung zur Schadensbehebung in einem Rohr**

(30) Priorität: 20.09.1993 CH 2831/93
(71) Anmelder: Csillag, Robert, CH-5610 Wohlen (CH)
(72) Erfinder: Csillag, Robert, CH-5610 Wohlen (CH)
(74) Vertreter: Fillinger, Peter, Dr.

(57) **Zusammenfassung**

Die Einrichtung weist einen im Rohr (1) in Richtung seiner Längsachse (17) verschieb- oder verfahrbaren Roboter (8) auf, der einen relativ zum Rohr (1) feststellbaren und einen in Richtung der Längsachse (17) verschieb- und um die Längsachse verdrehbaren Teil (15 bzw 16) aufweist. Der bewegliche Teil (16) trägt an seinem freien Ende mittels einer Schwenkeinrichtung (26) ein Werkzeug (9). Mit dieser Schwenkeinrichtung (26) ist das Werkzeug (9) quer zur Längsachse (17) verschwenkbar. Um den Roboter ( 8) für verschiedene Arbeitsgänge bei der Rohrsanierung verwenden zu können, ist vorgesehen, dass die Schwenkeinrichtung (26) ein auswechselbares Teil (35) aufweist, dass als Ersatz dieses Teils (35) weitere als Werkzeughalter ausgebildete Austauschteile vorhanden sind, und dass an jedem dieser Austauschteile ein anderes Werkzeug (Fig. 3 bis 6) lösbar oder unlösbar befestigt ist.

## Beschreibung

Die vorliegende Erfindung bezieht sich auf eine Einrichtung gemäss dem Oberbegriff des Anspruchs 1.

Abwasserleitungen erleiden im Verlauf der Zeit Schäden die sie undicht werden lassen. Die äussere Ursache solcher Schäden liegt meist in Veränderungen des die Rohrleitung umgebenden Erdreichs durch den Strassenverkehr und in natürlichen Bodensenkungen. Innere Ursache sind mit Chemikalien versetzte Abwässer, die das Rohrmaterial angreifen. Die auftretenden Schäden sind in der Regel Undichtheit der die einzelnen Rohrabschnitte verbindenden Muffen, in Umfangs- oder Längsrichtung des Rohres verlaufende Risse, Scherbenbrüche, Wurzeleinwuchs, undichte Einläufe von Hausanschlüssen und/oder vorstehende und/oder verkalkte Einläufe. Ebenso können in einem Rohr feste, den Rohrquerschnitt verkleinernde Ablagerungen entstehen, die einen Rückstau des Wassers bewirken. Liegen solche Schäden in einer Rohrleitung vor, kann daraus Abwasser unkontrolliert in die Umgebung austreten und in das Grundwasser gelangen, was letztlich zu einer Verschmutzung des Trinkwassers führt.

Zur Beseitigung fester Ablagerungen in einer Rohrleitung ist eine Einzweckeinrichtung mit einem Roboter mit einem fest instalierten Fräswerkzeug mit auswechselbarem Fräser bekannt geworden. Sie ist vergleichsweise einfach im Aufbau, kostengünstig und unempfindlich gegen die im Einsatz auftretenden Beanspruchungen durch Wasser und Schmutz. Ihr Nachteil liegt darin, dass sie zur Behebung der übrigen, aber häufigereren Schäden nicht verwendbar ist.

Unter der Bezeichnung KA-TE (KA-TE System AG, CH Zürich) sind weiter verschiedene Einzweckeinrichtungen mit je einem Roboter bekannt, wobei jeder Roboter mit einem Werkzeug für einen bestimmten Arbeitsgang wie Fräsen, Bohren, Injizieren, Spachteln, Strahlen etc. ausgerüstet ist. Mit diesen Einrichtungen können die vorgenannten Schäden behoben werden, doch besteht hier der Nachteil, dass zu einer vollständigen Ausrüstung mit der alle Schäden behoben werden können mehrere Einrichtungen erforderlich sind. Die Kosten für eine solche Ausrüstung sind daher hoch. Ein weiterer Nachteil besteht darin, dass der Roboter für das Spachteln und Injizieren die pastöse Flickmasse in einem Vorratsbehälter mitführt, was die Vorratskapazität verkleinert und wodurch der Roboter häufig aus dem Rohr für eine Neufüllung des Vorratsbehälters zurückbefohlen werden muss. Ebenso nachteilig ist die Montage einer Videokamera am Roboter. Trübt sich unter Arbeitsbedingungen deren Objektivlinse, muss der Roboter ebenfalls zur Reinigung zurückgeholt werden.

Eine ähnliche Einrichtung ist unter der Bezeichnung Sika Roboter (Sika Robotics AG, CH-Grünigen) bekannt, bei welcher der zwischen Werkzeugfassung und Videokamera befindliche Fräser gegen eine Spachteleinrichtung austauschbar ist. Auch bei dieser Einrichtung führt der Roboter einen Vorratsbehälter für die Flickmasse mit, was zu dem bereits aufgezeigten Nachteil führt. Ein weiterer Nachteil besteht darin, dass der Zwischenraum zwischen Werkzeugfassung und Videokamera zu klein ist, sodass um die vorgenannten Schäden zu beheben für einzelne Arbeiten ebenfalls mehrere, wenn auch weniger Roboter erforderlich sind, was die Kosten für eine mehrere Roboter umfassende Ausrüstung erhöht.

Die vorliegende Erfindung stellt sich die Aufgabe, die genannten Nachteile zu beseitigen, bzw. eine Einrichtung der erstgenannten Art derart so zu verbessern, dass mit einem einzigen Roboter alle der genannten Rohrschäden behebbar sind.

Erfindungsgemäss wird die Aufgabe gelöst durch die kennzeichnenden Merkmale des Anspuchs 1.

Anhand der beiliegenden schematischen Zeichnung wird die Erfindung beispielsweise erläutert. Es zeigen:
- Fig. 1: Einen Ausschnitt aus einem Rohrleitungssystem mit einer im Einsatz befindlichen Einrichtung,
- Fig. 2: einen Ausschnitt aus Fig. 2 mit dem Roboter in vergrösserter Darstellung,
- Fig. 3: ein erstes Austauschwerkzeug in Seitenansicht (a) und in Draufsicht (b)
- Fig. 4: ein zweites Austauschwerkzeug in Seitenansicht (a) und in Draufsicht (b),
- Fig. 5: ein drittes Austauschwerkzeug in Seitenansicht (a) und in Draufsicht (b),
- Fig. 6a und 6b: ein viertes Austauschwerkzeug in Seitenansicht (a) und in Draufsicht (b).
- Fig. 6c und 6d: Ansicht des Austauschwerkzeuges gemäss Fig.6a und 6b in Richtung der Pfeile c' und d'.

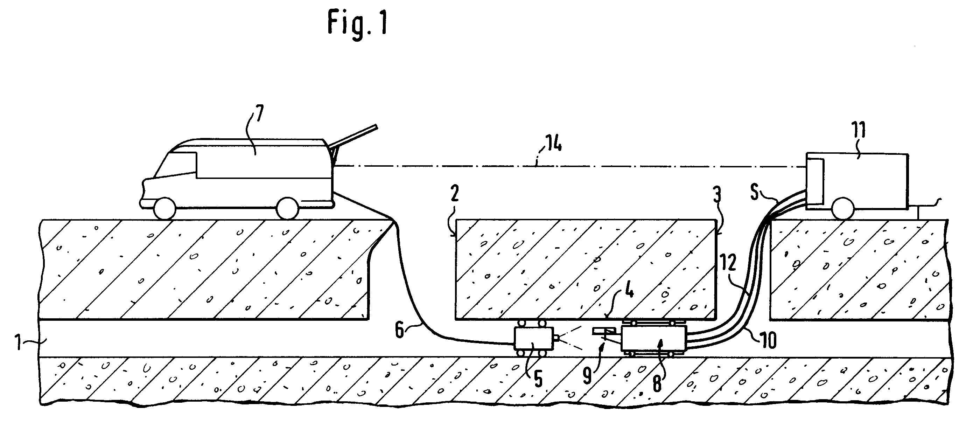

In Fig. 1 bezeichnet die Hinweisziffer 1 ein Kanalisationsrohr, zu dem zwei Kontrollschächte 2 und 3 führen. An einer Leckstelle 4 des Rohres 1 weist dieses einen mit einer verfahrbaren Videokamera 5 ausgemachten Riss auf, der abzudichten ist. Die Videokamera 5 ist ein handelsübliches Produkt und wird beispielsweise unter der Bezeichnung BCS 85 II von der Firma BCS System AG, Zufikon vertrieben. Sie ist mittels einer Übertragungs- und einer Befehlsleitung 6 mit einer Kommandozentrale 7 verbunden, in der sich der mit einem Monitor ausgerüstete Arbeitsplatz eines Operateurs befindet. Dieser beobachtet dort die von der Kamera 5 übertragenen Bilder und steuert von dort mittels einer Steuereinrichtung über die Befehlsleitung 6 unter anderem den Vor- und Rücklauf der Kamera 5, deren Objektivbrennweite und an der Kamera vorhandene Scheinwerfer zum Ausleuchten der Leckstellen 4. Der Kamera 5 gegenüber ist mit Abstand im Rohr 1 ein Roboter 8 angeordnet, der achsial zur Rohrlängsachse ausgerichtet ist und mit einem Werkzeug 9 die Leckstelle 4 bearbeitet. Der Roboter 8 ist mit Druckluft angetrieben, die mittels einer Druckluftleitung 10 von einer auf einem Fahrzeug 11 untergebrachten nicht dargestellten Druckluftquelle eingespeïst wird. Eine zweite Druckleitung 12 versorgt das Werkzeug 9 mit einer pastösen Flickmasse. Diese wird in einer auf dem Fahrzeug 11 angeordneten Aufbereitungsanlage (nicht dargestellt) aufbereitet und mittels einer Schneckenpumpe in die Druckleitung 12 gepresst. Als Flickmasse können Kunstharze, Schnellabbindemörtel und dgl. verwendet werden. Parallel zu den Leitungen 10, 12, ist noch eine Stromversorgungsleitung S vorhanden. Sind die Druckluftquelle, die Flickmassenaufbereitungsanlage und die Schneckenpumpe motorisch antreibbar, können deren Antriebsaggregate über eine zur Steuereinrichtung der Kommandozentrale 7 geführte Steuerleitung 14 vom Operateur ferngesteuert werden. Nach dem Einsetzen der Kamera 5 und des Roboters 8 durch die Kontrollschächte 2 und 3 in das Rohr 1 nimmt der Operateur seinen Platz in der Kommandozentrale 7 ein und steuert die Kamera 5 und den Roboter 8 von seinem Platz aus zur Leckstelle 4 und führt dort die erforderlichen Sanierungsarbeiten aus. Ist die Leckstelle 4 wie erwähnt ein Riss, wird der Roboter 8 zuerst mit dem Fräswerkzeug ausgerüstet und der Riss ausgefräst. Danach wird der Roboter 8 aus dem Rohr 1 ausgefahren und das Fräswerkzeug (wie später beschrieben) durch einen Spachtel ersetzt und an den Spachtel die Druckleitung 12 für die Flickmasse angeschlossen. Der Roboter 8 wird nun für das Ausspachteln des ausgefrästen Risses erneut durch den Kontrollschacht 3 in das Rohr 1 eingeführt und zur Leckstelle 4 vorgeschoben. Nach dem Ausspachteln des Risses kann gewünschtenfalls der Roboter 8 auf ein Schleifwerkzeug oder auf eine Spritzwasserreinigungsdüse umgerüstet und die Flickstelle fein bearbeitet oder gereinigt werden.

Auf dem Fahrzeug 11 befindet sich vorzugsweise ein Satz von Druckleitungsschläuchen 12 unterschiedlicher Länge. Dies hat den Vorteil, dass die Länge der Druckleitung 12 entsprechend dem Abstand der Leckstelle 4 vom Fahrzeug 11 gewählt werden kann. Durch die Wahl der kürzestmöglichen Druckleitung 12 können der Druckabfall und der nach dem Spachteln in der Druckleitung 12 verbleibende Flickmassenrest klein gehalten werden. Ebenso wird dadurch die Reinigung der Druckleitung 12 vereinfacht.

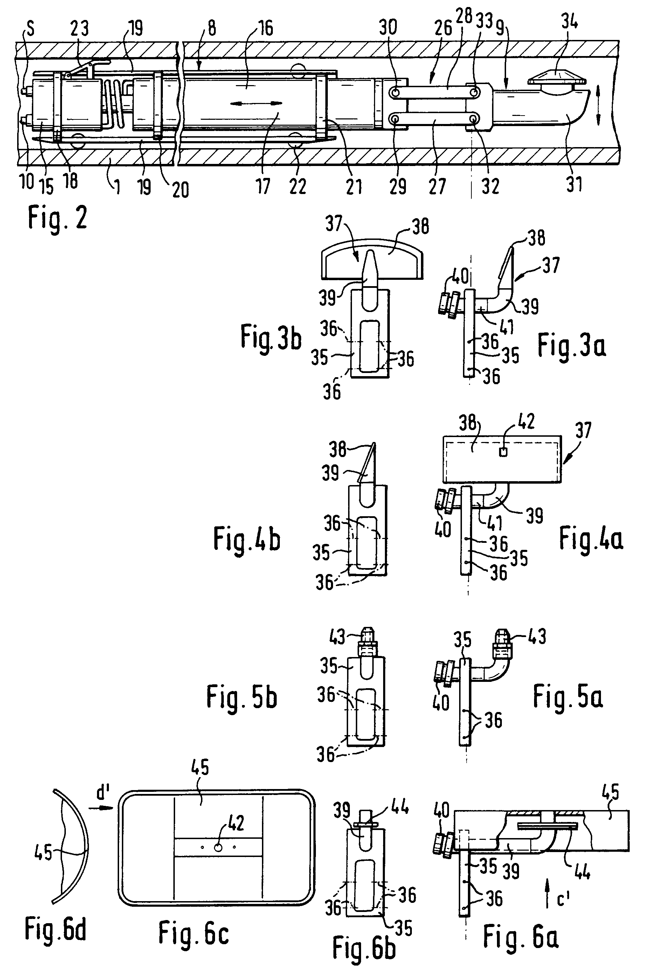

Fig. 2 zeigt einen an sich bekannten Roboter BJR Trading, DK-Roskilde,Typ Bearer Cutter) mit einem relativ zum Rohr 1 feststellbaren Teil 15 und einem beweglichen Teil 16, der relativ zum feststellbaren Teil 15 in Richtung der Längsachse 17 verschiebbar und um diese Achse drehbar ist. Auf den feststellbaren Teil 15 ist ein Ring 18 fest aufgesetzt, an dem radialsymmetrisch mit Bezug auf die Achse 17 versetzt mehrere Längsstäbe 19 befestigt sind. Koachsial und mit Abstand zum Ring 18 sind zwei weitere Ringe 20 und 21 mit den Längsstäben 19 fest verbunden. Die Ringe 18, 20, 21 und die Längsstäbe 19 bilden einen Käfig. Zwischen den Ringen 18, 20 21 und den Längsstäben 19 sind auswechselbare Distanzhalter vorgesehen, sodass der Aussendurchmesser des Käfigs dem Innendurchmesser des Rohres 1 angepasst und der Roboter 8 achsial zur Längsachse 17 des Rohres 1 ausgerichtet werden kann. In den als Gleitkufen verwendbaren Längsstäben 19 sind aber vorzugsweise frei dreh- oder antreibbare Rollen 22 angeordnet, die den Kraftaufwand für eine Verschiebung des Roboters 8 im Rohr 1 verringern. Der feststellbare Teil 15 weist radialsymmetrisch um die Achse 17 verteilt wenigstens zwei pneumatisch betätigbare Feststellhebel 23 auf, die pneumatisch gegen die Rohrinnenwand verspannbar sind und die der Fixierung des Teils 15 an einer bestimmten Stelle des Rohres 1 dienen.

Der feststellbare Teil 15 weist weiter eine feststehende, achsiale Kolbenstange 24 auf, auf welcher der bewegliche Teil 16 nach Art eines beweglichen Kolbens achsial verschiebbar gelagert ist. Zur achsialen Führung ist er zudem mit seinem zylindrischen Aussenmantel in den beiden Ringen 20 und 21 gleitend gelagert. Eine wendelförmige Druckleitung 15 verbindet die beiden Teile 15 und 16 und speist unter anderem die pneumatischen Motoren für die Verschiebe- und Drehbewegung des beweglichen Teils 16 und weiter das Werkzeug 9 und eine dieses mit dem beweglichen Teil 16 verbindende Schwenkeinrichtung 26.

Mit der Schwenkeinrichtung 29 ist das Werkzeug 9 quer zur Achse 17 schwenkbar. Die Schwenkeinrichtung 29 ist ein Parallelkurbelgetriebe mit einem Kurbelpaar 27 und einem Schwingenpaar 28. Vom Kurbelpaar 27 bzw. Schwingenpaar 28 ist in Fig. 2 nur die vordere Kurbel bzw. Schwinge sichtbar. Das Kurbelpaar 27 ist fest mit einer im beweglichen Teil 16 drehbar gelagerten Welle 29 verbunden, die, wie schon erwähnt, von einem im Teil 16 untergebrachten Pneumatikmotor antreibbar ist. Das Schwingenpaar 28 ist frei schwenkbar an einer zur Welle 29 parallelen, am beweglichen Teil 16 angeordneten Achse 30 gelagert. Die Koppel des Parallelkurbelgetriebes bildet das Gehäuse eines an sich bekannten, luftgetriebenen Fräswerkzeugs 31. Das Kurbelpaar 27 und das Schwingenpaar 28 sind an gehäusefesten Gelenkzapfen 32, 33 des Fräswerkzeugs angelenkt. Bei einer Drehung der Welle 29 wird das Fräswerkzeug in zur Achse 17 paralleler Ausrichtung gegen die Rohrinnenwand bzw. von dieser weg bewegt. Die Schwenkeinrichtung 26 kann aber auch als Bausatz mit unterschiedlich langen und auswechselbaren Kurbel- bzw. Schwingenpaaren konzipiert sein. Damit lässt sich ein Gelenkviereckgetriebe mit unterschiedlich langem Kurbel- bzw. Schwingenpaar 27, 28 zusammensetzen, bei dem das Längenverhältnis vorzugsweise so gewählt wird, dass die Neigung der Mittelachse des Fräsers 34 in Arbeitsstellung zur Achse 17 45° beträgt. Diese Ausführung der Schwenkeinrichtung 26 ist besonders geeignet zur Ausfräsung schräger Rohranschlüsse.

Die Gelenkzapfen 32, 33 sind lösbar am Gehäuse des Fräswerkzeugs 31 angeschraubt, sodass im Bedarfsfall das ganze Fräswerkzeug 31 entfernt bzw. gegen ein anderes Werkzeug ausgetauscht werden kann. Andere Werkzeuge sind in den Fig. 3 bis 6 dargestellt.

Alle anderen Werkzeuge weisen im Sinne eines Adapters eine Platte 35 auf, welche mit Gewindebohrungen 36 zum Einschrauben der Gelenkzapfen 32, 33 versehen sind.

Das Werkzeug nach Fig. 3 ist ein Spachtelwerkzeug mit einem an der Platte 35 befestigten Spachtelmesser 37. Dessen Klinge 38 ist mit einem dem Spachtelgriff entsprechenden, abgewinkelten Rohrstück 39 befestigt, welches die Platte 35 durchdringt und mit einer Anschlussmuffe 40 für die Druckleitung 12 versehen ist. Die kreissegmentförmig gebogene Schneide des Spachtelmessers 37 ist quer zur Achse 17 orientiert, wodurch Flickstellen mit einer Hin - und Herbewegung in Rohrlängsrichtung gespachtelt werden können. Das Rohrstück 39 hat (wie in der später beschriebenen Fig. 4 sichtbar) eine offene Mündung in der Breitseite der Klinge 38. Für das Spachteln einer Leckstelle wird die Flickmasse durch die Druckleitung 12 und das Rohrstück 39 vor die Klinge 38 gefördert und mit dieser in die Leckstelle gedrückt. Damit der Operateur für das Ausführen der Spachtelbewegung sicher weiss , ob vor der Klinge 38 der Flickmassennachschub hinreicht, ist vorzugsweise bei 41 ein Durchflussmengenmesser in das Rohrstück 39 eingesetzt, der ihm die tatsächlichen Fliessverhältnisse über eine nicht dargestellte Signalleitung meldet.

Fig. 4 zeigt ebenfalls ein Spachtelwerkzeug, dessen Klinge 38 in gleicher Weise am Adapter 35 befestigt und gegenüber jener in Fig. 3 parallel zur Achse 17 orientiert ist und eine gerade Schneide aufweist. Mit diesem Spachtelwerkzeug kann eine um die Achse 17 drehende Hin- und Herbewegung ausgeführt werden. In Fig. 4 ist die Mündung 42 des Rohrstücks 39 sichtbar, durch die die Flickmasse während der Spachtelbewegung des Werkzeugs austritt.

Fig. 5 zeigt ein Injektionswerkzeug, mit welchem die Flickmasse auf der Aussenseite eines Rohres im Bereich der Leckstelle in das umgebende Erdreich injiziert und die Leckststelle auf diese Weise abgedichtet werden kann. Wie bei den Werkzeugen nach den Fig. 3 und 4 ist das abgewinkelte Rohrstück 39 am Adapter 35 befestigt und mit einer Anschlussmuffe 40 versehen. Auf das andere Rohrstückende ist eine Injektionsdüse 43 aufgeschraubt. Für die Vornahme einer Injektion wird die Leckstelle mittels eines Bohrers radial durchbohrt. Danach wird die Düse 43 in das Bohrloch eingeführt und die Flickmasse durch das Bohrloch hindurch nach der Rohraussenseite gepresst.

Grossflächige Schäden wie Scherbenbrüche oder erodierte Rohrflächen können mit einem Werkzeug nach Fig. 6 behoben werden. Das am Adapter 35 befestigte Rohrstück 39 weist an einem Ende die Anschlussmuffe 40 und am anderen Ende einen länglichen Flansch 44 auf, an dem eine Rundschalungsplatte 45 auswechselbar angeflanscht ist. Diese wird mit der Rohrstückmündung 42 mittig auf eine Schadstelle aufgesetzt. Danach wird die Flickmasse in die Schadstelle gepresst und dann mit einer Drehbewegung des Werkzeugs um die Achse 17 geglättet. Durch ein Lösen der Flanschverbindung können am Werkzeug Schalungsplatten mit unterschiedlichen Krümmungsradien (entsprechend dem Rohrradius) angebracht werden.
Nach einem nicht dargestellten Werkzeugbeispiel kann an das Rohrstück 39 eine nadelförmige Blasdüse zum Aufblasen von Dichtungsballonen angebracht sein. Mit solchen Dichtungsballonen können die Mündungen von Anschlussleitungen verschlossen werden, wenn deren Anschluss an das Rohr 1 saniert werden muss.

Nach einem weiteren nicht dargestellten Ausführungsbeispiel kann der Fräser 34 auf seiner verjüngten Seite mit einer Befestigungseinrichtung für ein Bohrfutter versehen sein, in welches Bohrer für radiale Bohrungen durch die Rohrwand einspannbar sind.

## Patentansprüche

1. Einrichtung zur Schadensbehebung in einem Rohr mit einem im Rohr (1) in Richtung seiner Längsachse (17) verschieb- oder verfahrbaren Roboter (8), der einen relativ zum Rohr (1) feststellbaren und einen in Richtung der Längsachse (17) verschieb- und um die Längsachse verdrehbaren Teil (15 bzw. 16) aufweist, welcher Teil (16) an seinem freien Ende mittels einer Schwenkeinrichtung (26) ein Werkzeug (9) trägt mit welcher Schwenkeinrichtung (26) das Werkzeug (9) quer zur Längsachse (17) verschwenkbar ist, dadurch gekennzeichnet, dass die Schwenkeinrichtung (26) ein auswechselbares Teil (35) aufweist, dass als Ersatz dieses Teils (35) weitere als Werkzeughalter ausgebildete Austauschteile vorhanden sind, und dass an jedem dieser Austauschteile ein anderes Werkzeug (Fig. 3 bis 6) lösbar oder unlösbar befestigt ist.

2. Einrichtung nach Anspruch 1, dadurch gekennzeichnet, dass die Schwenkeinrichtung (26) ein Gelenkviereck ist, bei welchem die Koppel das auswechselbare Teil (35) ist.

3. Einrichtung nach Anspruch 2, dadurch gekennzeichnet, dass das Gelenkviereck ein Parallelkurbelgetriebe ist.

4. Einrichtung nach Anspruch 2, dadurch gekennzeichnet, dass die Kurbel (27) oder die Schwinge (28) des Gelenkvierecks auswechselbar ist.

5. Einrichtung nach Anspruch 1, dadurch gekennzeichnet, dass jeder Austauschteil einen Anschlussstutzen (40) für einen Druckmediumschlauch (12) aufweist, der das Werkzeug mit einer durch eine Steuereinrichtung betätigbaren Druckmediumquelle ausserhalb des Rohres (1) verbindet.

6. Einrichtung nach einem der Ansprüche 1 bis 5, dadurch gekennzeichnet, dass die anderen Werkzeuge einen Spachtel (Fig. 3 und 4), eine Injektionsdüse (Fig. 5), eine Rundschalungspaltte (Fig. 6) und/oder eine Blasdüse sind.

7. Einrichtung nach Anspruch 5 oder 6, dadurch gekennzeichnet, dass in Förderrichtung des Druckmediums nach dem Anschlussstutzen (40) ein Durchflussmesser (41) angeordnet ist, welcher Durchflussmesser (41) mit der ausserhalb des Rohres (1) befindlichen Steuereinrichtung durch eine Signalleitung verbindbar ist.

8. Einrichtung nach einem der Ansprüche 1 bis 7 mit einer unabhängig vom Roboter (8) im Rohr (1) längsverschieb- oder verfahrbaren Videokamera (5), welche mit einer Bildübertragungsleitung (6) mit einem ausserhalb des Rohres befindlichen Bildschirm verbunden ist und dass die Steuereinrichtung und der Bildschirm einen gemeinsamen Aufstellungsstandort, vorzugsweise in einem Fahrzeug (7) haben.

9. Einrichtung nach Anspruch 5, dadurch gekennzeichnet, dass ein Satz auswechselbarer Druckmediumschläuche unterschiedlicher Länge vorhanden sind.

10. Einrichtung anch Anspruch 1, dadurch gekennzeichnet, dass das Werkzeug (9) ein Fräswerkzeug ist, und dass der Fräser (34) axial zu seiner Drehachse mit einem Bohrfutter ausrüstbar ist.
